**Europäisches Patentamt**

**European Patent Office**

**Office européen des brevets**

(19)

(11) Veröffentlichungsnummer: **0 186 222 B1**

(12) # EUROPÄISCHE PATENTSCHRIFT

(45) Veröffentlichungstag der Patentschrift:
**05.10.88**

(51) Int. Cl.⁴: **B 23 D 29/02**, H 02 G 1/00

(21) Anmeldenummer: **85201831.6**

(22) Anmeldetag: **11.11.85**

(54) **Handbetätigtes Schneidgerät.**

(30) Priorität: **14.12.84 SE 8406388**

(43) Veröffentlichungstag der Anmeldung:
**02.07.86 Patentblatt 86/27**

(45) Bekanntmachung des Hinweises auf die Patenterteilung:
**05.10.88 Patentblatt 88/40**

(84) Benannte Vertragsstaaten:
**CH DE FR GB IT LI SE**

(56) Entgegenhaltungen:
**DE - A - 3 224 989**
**DE - C - 521 081**
**DE - C - 730 104**
**GB - A - 2 025 825**
**US - A - 2 915 822**

(73) Patentinhaber: **Laux, Friedrich Günther, Königsweg 304, D-1000 Berlin 39 (DE)**
Patentinhaber: **Laux, Steffen, Königsweg 304, D-1000 Berlin 39 (DE)**

(72) Erfinder: **Laux, Friedrich Günther, Königsweg 304, D-1000 Berlin 39 (DE)**
Erfinder: **Laux, Steffen, Königsweg 304, D-1000 Berlin 39 (DE)**

(74) Vertreter: **Staeger, Sigurd, Dipl.-Ing. et al, Patentanwälte Dipl.-Ing. S. Staeger Dipl.-Ing. Dipl.-Wirtsch.-Ing. R. Sperling Müllerstrasse 31, D-8000 München 5 (DE)**

ACTORUM AG

## Beschreibung

Die Erfindung bezieht sich auf ein handbetätigtes Schneidgerät, insbesondere einen Kabelschneider, von der im Oberbegriff des angeschlossenen Patentanspruchs 1 angegebenen Art, der als sogenannter zweischneidiger Kabelschneider eine feststehende und mit einer im wesentlichen konkav gestalteten ersten Schneide versehene Schneidplatte und ein drehbares, am Aussenrand verzahntes und am Innenrand mit einer zweiten Schneide (Innenschneide) versehenes Drehmesser aufweist, welches durch Hubbewegungen eines in die Verzahnung eingreifenden Vorschubtriebes in Bewegung gesetzt wird, wobei ein von den beiden Schneiden umfasstes Werkstück durch stetige Verkleinerung des lichten Schneidenabstandes zertrennt wird.

Sowohl die erste Schneide, als auch die zweite Schneide am Drehmesser wurden bisher ausschliesslich zügig konkav, d.h. ohne Vorsprünge, gestaltet.

Zur Erzeugung hoher Schneidkräfte sind als Vorschubtriebe mechanische Schliesstriebe bekannt, die in ihrer Funktion einem Zahnradgetriebe (DD-A-46 619) oder einem Kniehebelschubgetriebe (DE-C-2 832 561) entsprechen. Wegen des unvermeidlich hohen Übersetzungsverhältnisses und mit Rücksicht auf die Festigkeit der einzelnen Teile sind Zahnradgetriebe minder geeignet, wenn es sich um ein kleineres, leichtes Handwerkzeug handelt. Auch ein Kniehebelschubantrieb findet bei vorgegebener Baugrösse des Gerätes eine Grenze im Übersetzungsverhältnis, da die Hebelgelenke nicht beliebig eng zueinander gesetzt werden können, denn bei zunehmenden Übertragungskräften bedingen zunehmende Durchmesser der Gelenkbolzen grössere wirksame Abstände und vermindern das Übersetzungsverhältnis. Eine Vergrösserung des Drehmesser-Durchmessers würde wiederum ein grösseres, schwereres und kostspieligeres Gerät ergeben.

Die vorliegende Erfindung stellt sich somit ausgehend vom nächstkommenden Stand der Technik gemäss DE-C 2 832 561 die Aufgabe, bei Anpassung eines weitgehend mit einer Hand betriebenen Werkzeuges an mittlere Handkräfte und mittlere Griffweiten des Gebrauchers das Übersetzungsverhältnis gegenüber den vorbekannten Konstruktionen wesentlich zu erhöhen und durch eine neue Schneidkantengeometrie den Einsatzbereich des Gerätes insbesondere auf grössere Kabel mit Sektor-Leiter-Aufbau (s.g. Sektor-Kabel) zu erweitern, indem die erforderliche Handkraft aufs wirtschaftlichste zum Einsatz gebracht werden kann.

Das erfindungsgemässe Gerät weist die im kennzeichnenden Teil des angeschlossenen Patentanspruchs 1 angeführten Merkmale auf, und die angeschlossenen Unteransprüche erfassen vorteilhafte Weiterentwicklungen.

Die Erfindung soll nun anhand beigefügter Zeichnungen, die sich auf Ausführungsbeispiele beziehen, näher erläutert werden. Hierbei zeigt

Fig. 1 ein erfindungsgemässes Gerät in Draufsicht;

Fig. 2 eine Seitenansicht des gleichen Gerätes in Richtung des Pfeiles II in Fig. 1;

Fig. 3 die gleiche Draufsicht wie in Fig. 1 aber in grösserem Massstab, teilweise im Schnitt und mit abgenommener Deckplatte;

Fig. 4 eine Draufsicht, in gleichem Massstab wie Fig. 1 und 2 und teilweise im Schnitt, des unteren Teiles einer etwas abgewandelten Ausführungsform des erfindungsgemässen Gerätes;

Fig. 5 eine Draufsicht in gleichem Massstab wie Fig. 3 des oberen Teiles des Gerätes gemäss Fig. 1 bis 3;

Fig. 6a bis 6c Kurvenzüge, welche den Schneidvorgang mit dem erfindungsgemässen Gerät charakterisieren, wobei Fig. 6aa bis 6cc die Kabelquerschnitte darstellen, auf die sich die Fig. 6–6c beziehen.

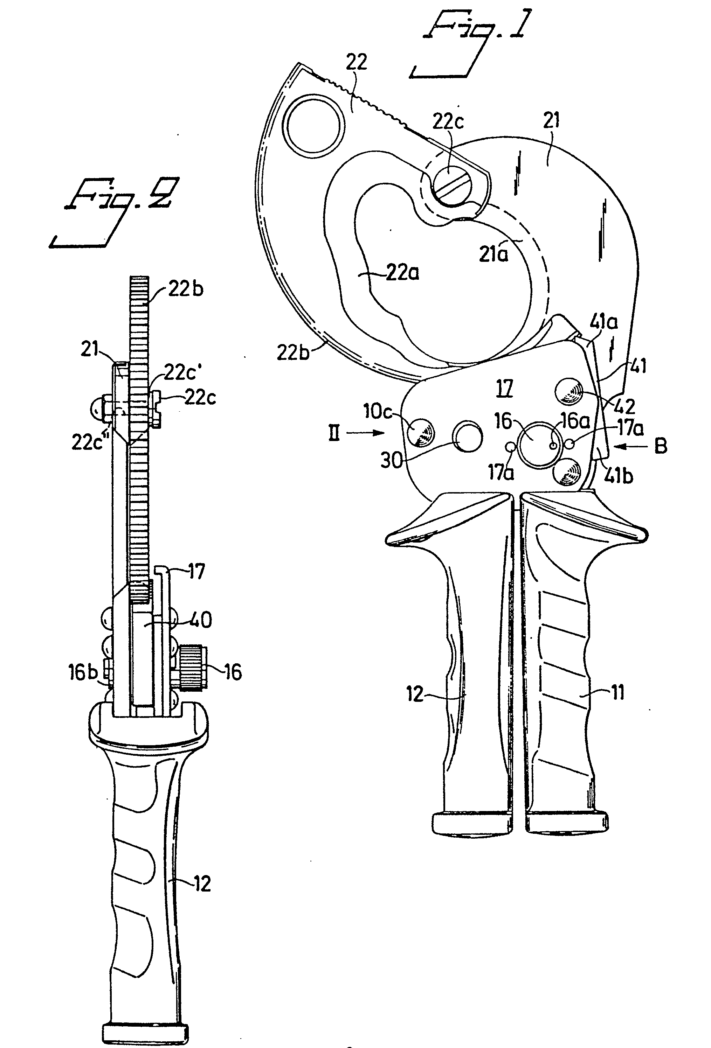

Gemäss Fig. 1–5 weist ein erfindungsgemässes Gerät eine unbewegliche Schneidplatte 21 und einen starr daran angeschlossenen ersten Handgriff 11 auf. Die Schneidplatte 21 umfasst am unteren Ende ein Montageteil 21′ und anschliessend daran ein Schneidteil 21″ mit einer inneren Umfangskante, links in der Zeichnung, und einer äusseren Umfangskante, rechts in der Zeichnung. Entlang der inneren Umfangskante erstreckt sich eine kurvenförmige, zügig-konkave Schneide 21a zwischen einem ersten Ende 21a′ im Bereich des Montageteiles 21′ und einem zweiten Ende 21a″, welches vom Montageteil 21′ entfernt ist. An die Schneidplatte 21 ist im Bereich des genannten ersten Endes 21a′ mittels eines Griffrohrhalters 45 ein erster Handgriff 11 starr angeschlossen und bildet zusammen mit der Schneidplatte 21 eine starre Baueinheit 10.

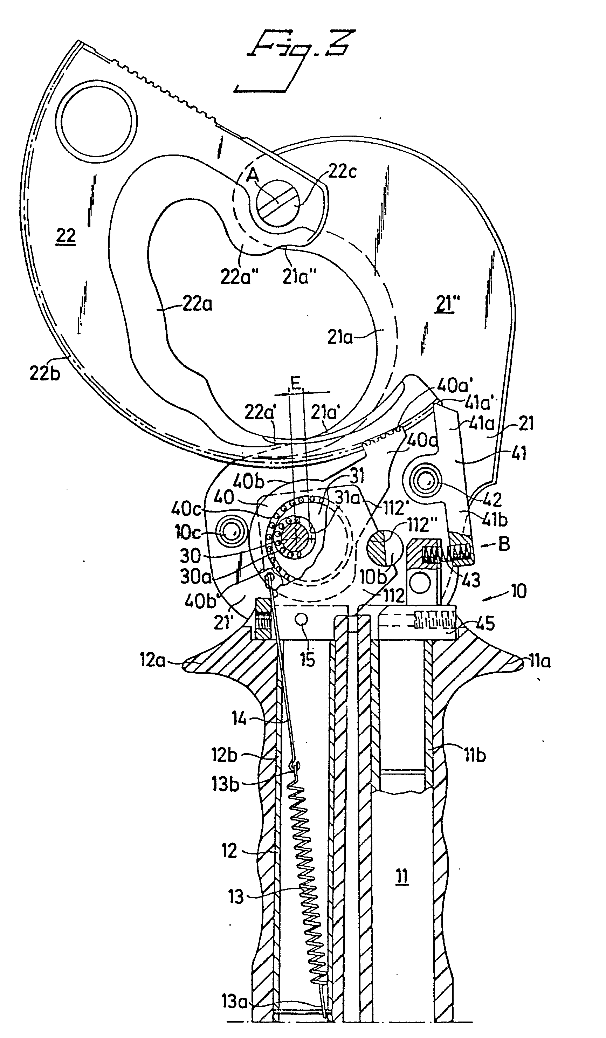

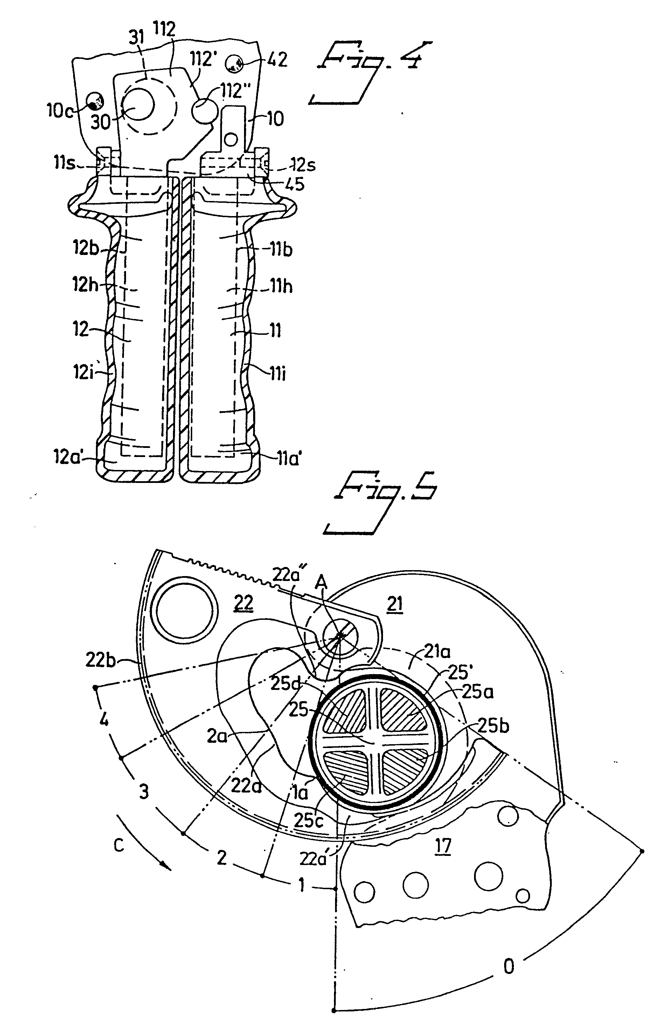

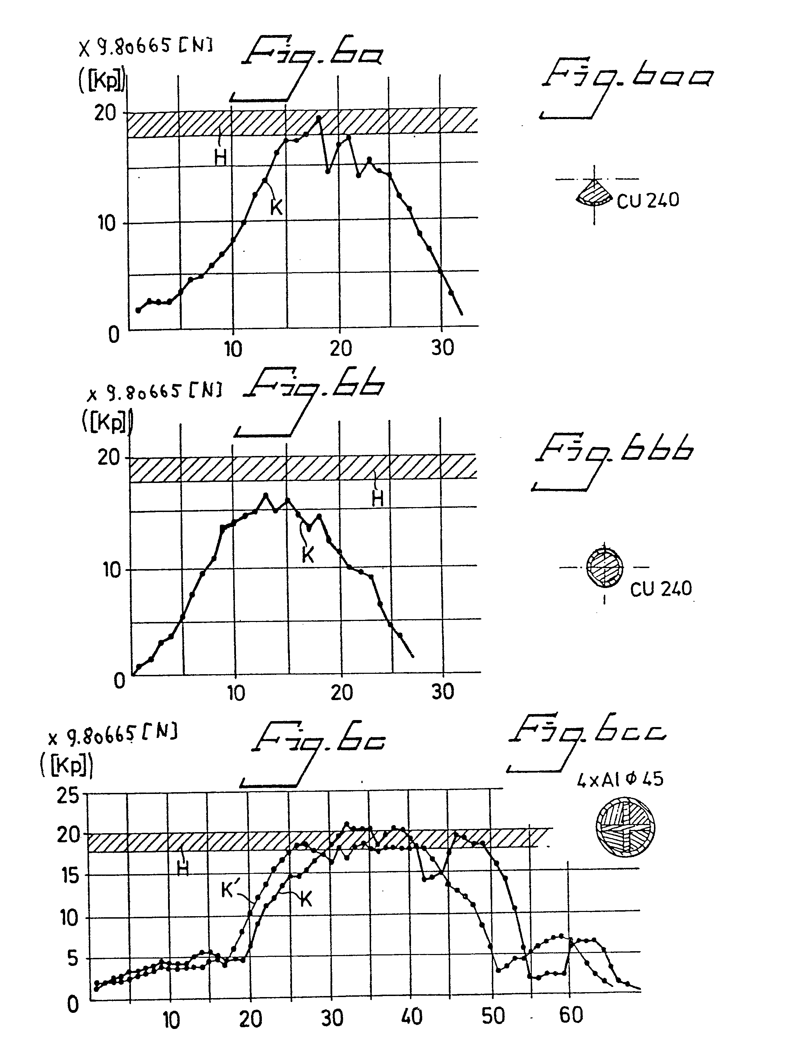

Ein bewegliches Drehmesser 22 ist in einer Messer-Anlenkstelle A im Bereich des genannten zweiten Endes 21a″ mittels einer federbelasteten (Feder 22c′, Fig. 2) Zapfenschraube 22c an die Schneidplatte 21 angelenkt. Die innere Umfangskante des Drehmessers 22 bildet eine zweite Schneide 22a, die sich zwischen einem ersten Ende 22a′ in Entfernung vom Messer-Anlenkpunkt A, und einem zweiten Ende 22a″ im Bereich dieses Punktes, erstreckt. Der Verlauf der zweiten Schneide 22a ist erfindungsgemäss an die je Arbeitshub aufzubringende und aufbringbare Schnittarbeit angepasst (siehe Fig. 5 mit zugehöriger Beschreibung), und die Leichtgängigkeit des Gerätes und die Höhe der Spitzenbelastung seiner Einzelteile werden von diesem Verlauf der zweiten Schneidkante 22a ebenfalls entscheidend beeinflusst.

Die äussere Umfangskante des Drehmessers 22 ist kreisbogenförmig und mit einer Verzahnung 22b versehen deren Krümmungsmittelpunkt sich im Messer-Anlenkpunkt A befindet, wo ferner auch eine Aufnahmebohrung 22c″ (Fig. 2) für die Zapfenschraube 22c vorgesehen ist.

Ein beweglicher zweiter Handgriff 12 weist am oberen Ende einen von einem Plattenglied dargestellten Anschlussteil 112 auf, der in Fig. 3 teilweise abgebrochen ist, und mit dem ein zylindrischer Block 31 drehfest verbunden ist. Im zylindrischen Block 31 ist exzentrisch eine Bohrung 31a angeordnet, in der ein in Fig. 3 nur zum Teil dargestelltes reibungsherabsetzendes Lager, nämlich ein Nadellager 30a angeordnet ist. Der bewegliche Handgriff 12 ist mittels eines im Montageteil 21' vorgesehenen und in die Bohrung 31a und das Nadellager 30a hineinragenden zylindrischen Gelenkbolzens 30 an diesen Montageteil 21' schwenkbar angelenkt.

Es ist offensichtlich, dass der Anschlussteil 112 und/oder der zylindrische Block 31 auch mit einem drehfest angeschlossenen Zapfen versehen sein können, der mit oder ohne Zwischenschaltung eines reibungsherabsetzenden Lagers drehbar im Montageteil 21' gelagert werden kann. Keine Bohrung ist dann im zylindrischen Block 31 erforderlich.

Eine Vorschubklinke 40 (Fig. 3) weist einen Eingriffsteil 40a und einen Lagerungsteil 40b auf. Der Eingriffsteil trägt eine zum Eingriff mit der Verzahnung 22b des Drehmessers 22 vorgesehene Zahnreihe 40a'. Im flachen Lagerungsteil 40b befindet sich eine kreisrunde Öffnung 40b', in der ein weiteres reibungsherabsetzendes Lager nämlich ein Nadelkäfig 40c angeordnet ist. Die Vorschubklinke 40 ist mittels dieser Öffnung 40b' drehbar auf dem zylindrischen Block 31 aufgesetzt.

Die Anwendung von reibungsvermindernden Nadellagern verbessert den Wirkungsgrad der Anordnung dermassen, dass in neue Anwendungsbereiche vorgedrungen und das Gerät optimal an mittlere Handkräfte und Griffweiten des Benutzers angepasst werden kann.

Flanken- und Biegefestigkeit der Zahnverbindung 22b/40a und die Lagerbelastbarkeit der Lagerungen 30a/30 und 40b/31 bilden die wesentlichen Grenzwerte für die Auslegung der Bauteile. Die wirksamen, vom Benutzer aufzubringenden Handhebelkräfte sollen die in den nachfolgenden Fig. 6a–6c schraffiert dargestellte Zone H nicht wesentlich überschreiten; Spitzenwerte der Kraftkurven K wurden durch die bereits erwähnte erfindungsgemässe Schneidengeometrie, d. h. Verlauf der zweiten Schneide 22a abgetragen, wobei im Interesse der Lebensdauer des Gerätes eine etwas grössere Zahl von Einzelhüben in Kauf genommen wird.

Der Exzenterantrieb weist gegenüber einem Kniehebelschubantrieb grundsätzliche konstruktive Vorteile auf.

Je kleiner die Exzentrizität E (Fig. 3) zwischen den geometrischen Zentren des zylindrischen Blockes 31 und des zylindrischen Gelenkzapfens 31 ist (die allerdings nie null sein darf), desto grössere Vortriebskräfte werden über die Vorschubklinke 40 auf die Verzahnung 22b übertragen und desto günstigere Möglichkeiten ergeben sich für die Bemessung und Lagerung des zylindrischen Blockes 31 mit dem Nadellager 40c und der Vorschubklinke 40 sowie für die Bemessung der exzentrischen Bohrung 31a mit dem Nadelkäfig 30a und dem Gelenkbolzen 30.

Beide Handgriffe 11, 12 sind als mit Kunststoff-Formgriffen 11a, 12a überzogene Griffrohre 11b,

12b gestaltet. Eine Zugfeder 13 ist an einem Ende mittels eines Auges 13a im Griffrohr 12b aufgehängt, und ihr anderes Ende 13b ist mittels eines Zugbügels 14 derart an den Lagerungsteil 40b der Vorschubklinke 40 angeschlossen, dass die Feder 13 den Eingriffsteil 40a dieser Klinke 40 dauernd zum Eingriff mit der Verzahnung 22b eindreht. Hierbei erfüllt die Feder 13 gleichzeitig auch eine zweite Funktion, indem sie den beweglichen zweiten Handgriff 12 in eine vom festen ersten Handgriff 11 ausgeschwenkte Lage dreht. Eine Distanzhülse 10b begrenzt den Schwenkwinkel.

Ein Zapfen bzw. Anschlagbolzen 15, dessen Funktion später erläutert wird, ist am Übergang zwischen dem Griffrohr 12b und dem Anschlussteil 112 des zweiten Handgriffes 12 vorgesehen.

An einer seitlichen Umfangskante 112' des Anschlussteiles 112 ist eine halbkreisförmige Ausnehmung 112" vorgesehen, und im Montageteil 21' ist eine Sperrwelle 10b drehbar gelagert, die zumindest in ihrem der Dicke des Anschlussteiles 112 entsprechenden und neben diesem Anschlussteil 112 liegenden Teil etwa bis zum halben Durchmesser freigefräst ist. Die Sperrwelle 10b ist hierbei an solcher Stelle im Montageteil 21' gelagert, dass je nach ihrer Drehlage entweder der neben der Ausfräsung verbleibende Teil der Sperrwelle 10b sich in der Ausnehmung 112" befindet, wie in Fig. 3 dargestellt, oder dass die Ausfräsung mit der Ausnehmung 112" zusammenfällt, und die Sperrwelle 10b mit dem Anschlussteil 112 überhaupt nicht im Eingriff steht. In dem erstgenannten Fall blockiert die Sperrwelle 10b den Anschlussteil 112 und somit den ganzen beweglichen zweiten Handgriff 12, wobei die Lage der Ausnehmung 112" derart gegenüber derjenigen der Sperrwelle 10b gewählt ist, dass Sperrung dann eintrifft, wenn sich der zweite Handgriff 12 am nächsten dem festen ersten Handgriff 11 befindet. Im zweitgenannten Fall beeinflusst die Sperrwelle 10b den zweiten Handgriff 12 nicht mehr und ermöglicht sein Ausschwenken durch Federkraft (Feder 13), wobei der Schwenkwinkel vom Anstoss der in Fig. 3 linken, abgebrochenen Seitenkante des Anschlussteiles 112 an eine eine Deckplatte 17 (Fig. 1) tragende Distanzhülse 10c begrenzt. Die Sperrwelle 10b mit der Ausnehmung 112" bilden somit einen einfachen und wirksamen Arretiermechanismus.

An der Deckplatte 17 (Fig. 1 und 2) sind Markierungen 17a in verschiedenen Farben angeordnet, die zusammen mit einer Markierung 16a an einem Bedienungskopf 16 die jeweilige Drehlage der Sperrwelle 10b aussen anzeigen. Dieser Bedienungskopf 16 (Fig. 1 und 2) ist zur Betätigung der Sperrwelle 10b an deren einem freien Ende angeordnet und wird vom anderen Ende der Sperrwelle 10b her von einer federnden Scheibe gegen eine Deckplatte 17 (Fig. 1 und 2) gezogen. Dieser Reibschluss verhindert eine ungewollte Verstellung.

Am Montageteil 21' ist ferner eine Distanzhülse 42 angeordnet, welche zusammen mit der genannten Distanzhülse 10c die Deckplatte 17 im vorgewählten Abstand vom Montageteil 21' trägt und ausserdem als auch Lagerung einer Halteklinke 41 dient, welche die Form eines zweiarmigen Hebels hat. Der eine Hebelarm 41a streckt sich zur Zahnreihe 22a hin und ist mit einer Eingriffsspitze oder Schneidkante 41a' zum Eingriff in die Zahnreihe 22b abgeschlossen, während der andere Hebelarm 41b bei B für Druckbetätigung von aussen zugänglich ist, und von einer Druckfeder 43 dauernd im Sinne des genannten Eingriffes der Halteklinke 41 beaufschlagt wird.

Zur Übertragung einer bestimmten Schneidarbeit ist eine bestimmte Anzahl von Einzelhüben des beweglichen zweiten Handgriffes 12 erforderlich. Durch einen erfindungsgemäss gestalteten Verlauf der zweiten Schneide 22a am Drehmesser 22 kann die je Einzelhub erforderliche Schnittarbeit günstig beeinflusst, d.h. herabgesetzt werden. Gemäss Fig.5 ist der Verlauf der zweiten Schneide 22a in fünf Abschnitte 0–4 aufgeteilt, die einzelnen Arbeitsphasen entsprechen und im Zuge der Drehung des Drehmessers 22 einer nach dem anderen zur Wirkung gelangen.

1. Arbeitsphase: in einem Werkstückumfassungsbereich 0 wird ein eingeführtes Arbeitsstück, wie z.B. ein eingelegtes Kabel 25, von den beiden Schneiden 21a und 22a umfasst, aber noch nicht angeschnitten;

2. Arbeitsphase: in einer ersten Schnittphase wird die äussere Isolierschicht 25' des Kabels 25 vom «Vorschneider» 1 der zweiten Schneide 22a, der einen ziemlich scharfen konvexen Vorsprung 1a aufweist, schnell durchtrennt;

3. Arbeitsphase: die Aussenkonturen mehrerer Sektoren wie 25a–25d werden in einer zweiten Schneidphase von einem Abschnitt 2 der zweiten Schneidkante 22a, der den ansteigenden Teil eines zweiten, minder scharfen konvexen Vorsprunges 2a umfasst, angeschnitten; der Kabelaufbau verdichtet sich bei stark zunehmenden Schnittkräften;

4. Arbeitsphase: in einer dritten Schnittphase, nach dem Übergang zum 3. Abschnitt, der den absinkenden Teil des zweiten Vorsprunges 2a umfasst, erfolgt eine Verminderung des Schnittkraftanstieges durch Erzeugung eines «ziehenden Schnittes»;

5. Arbeitsphase: der verbliebene metallische Kabelbereich wird in einer abschliessenden vierten Schnittphase weiter im «ziehenden Schnitt» in einem stark und ausschliesslich konkaven 4. Abschnitt, der sich am nächsten zum Messer-Anlenkpunkt A befindet, durchtrennt bei zunehmender Verlagerung zum Drehpunkt A des Drehmessers 22 hin und bei hierdurch beschleunigtem Abfall der Handhebelkräfte.

Die zweite Schneide 22a umfasst somit der Reihe nach vom ersten Ende 22a' zum zweiten Ende 22a" gerechnet einen Erfassungsbereich 0 ohne Schnittfunktion, einen ersten Schneidabschnitt 1 mit einem ersten konvexen Vorsprung 1a, einen zweiten Schneidabschnitt 2 der im ansteigenden Teil eines zweiten konvexen Vorsprungs 2a endet, einen dritten Schneidabschnitt 3, der mit dem absinkenden Teil des Vorsprungs 2a beginnt und einen abschliessenden vierten Schneidabschnitt, der ausschliesslich konkav, und von allen Abschnitten am meisten konkav, ist. Der erste konvexe Vorsprung 1a befindet sich im Bereich des ersten Endes 22a' der zweiten Schneide 22a und der zweite konvexe Vorsprung 2a, der minder scharf als der erste ist, befindet sich zwischen dem ersten Vorsprung 1a und dem zweiten Ende 22a" der zweiten Schneide 22a, genauer gesagt am Übergang zwischen dem 2. und 3. Abschnitt. Der erste Vorsprung 1a bildet die Stelle des ersten Einschnittes der zweiten Schneide 22a in ein zu trennendes Kabel 25. Nach gänzlichem Durchtrennen des Kabels 25 kann das Drehmesser 22 in Arbeitsrichtung C frei weitergedreht werden, denn sowohl die Vorschubklinke 40 wie die Halteklinke 41 lassen die Zahnreihe 22b vorbeigleiten.

Nachdem das Kabel 25 völlig durchtrennt worden ist, kann das Drehmesser 22 im Sinne des Pfeiles C, d.h. im gleichen Sinne wie während des Arbeitseinsatzes frei weitergedreht werden, weil die Vorschubklinke 40 als auch die Halteklinke 41 es der Zahnreihe 22 gestatten, frei vorbeizugleiten.

Eine Rückstellung des Drehmessers 22 ist in jeder Drehlage möglich. Vor dem vollen Ausschwenken des beweglichen zweiten Handgriffes 12, d.h. vor dessen Anschlag an die Distanzhülse 10c, berührt der Zugbügel 14 der Feder 13 den Anschlagbolzen 15 und dreht die Vorschubklinke 40 aus dem Eingriff. Die federbelastete Halteklinke 41 verhindert den Rücklauf des Drehmessers 22 zufolge der Belastung der Schneiden 21a, 22a nur insofern, als sie nicht bei B eingedrückt wird; beim Niederdrücken der Halteklinke 41 bei B kann das Drehmesser 22 unbehindert rückwärts gedreht werden, wenn zuvor der bewegliche zweite Handgriff 12 durch Handkraft bis zum Anschlag an die Distanzhülse 10c herangedreht worden ist.

Für den nächsten Schnitt wird das Drehmesser 22 wieder bis zur Anlage an ein Kabel herangedreht (diese Situation ist in Fig.4 dargestellt), wobei die Halteklinke 41 den Rücklauf verhindert, und mit den ersten Schwenkungen des Handgriffes 12 beginnt ein neuer Trennvorgang.

Während in den Fig.1–3 dargestellt ist, dass die Griffrohre 11b, 12b mit formschlüssig aufgezogenen Kunststoff-Formgriffen 11a, 12a überzogen sind, sind gemäss Fig.4 zwecks Arbeiten an spannungsführenden Kabeln Isolierhandgriffe nach einschlägigen Vorschriften dargestellt, d.h. Griffhülsen 11a', 12a', die als vorgearbeitete Formteile mit geeigneten Isolierschichten 11i, 12i versehen und mittels Schrauben 11s und 12s am Griffrohrhalter 45 bzw. am Montageteil 112 angeschraubt sind. Die beiden Handgriffe 11, 12 bzw. die Griffhülsen 11a', 12a' weisen innere Hohlräume 11h, 12h auf, wobei im Hohlraum 12h eine in Fig.4 nicht dargestellte Feder gleicher Weise wie die Feder 13 in Fig.3 untergebracht ist.

In den Fig.6a–6c sind für den Trennvorgang mit dem erfindungsgemässen Gerät charakteristische Kurvenzüge K, welche den erforderlichen Kraftaufwand wiedergeben, dargestellt. Der Kurvenzug K' in Fig.6c enspricht einer anderen Drehlage des gleichen Kabels im Gerät, wobei die entsprechenden Kabeltypen bzw. -querschnitte in den Figuren 6aa–6cc dargestellt sind. In den Fig. 6a–6c ist an der Abzissenachse jeweils die Anzahl der benötigten Hübe mit dem zweiten Handgriff 12 und auf der Ordinatenachse der erforderliche Kraftaufwand in ‹Newton› (Kilopond) aufgetragen. Aus Fig. 6c, die sich auf die Durchtrennung eines Kabels 25 mit Sektor-Leiter-Aufbau gemäss Fig. 5 und Fig. 6c bezieht, kann die Abminderung der Spitzenlast und ihre Verteilung auf eine Anzahl von Arbeitshüben herausgelesen werden, im Gegensatz zu den Kurvenzügen K gemäss Fig. 6a und 6b, die sich auf Einleiterkabel 6aa und 6bb mit relativ kleinem Durchmesser beziehen, wo eine Durchtrennung nur in der oben erwähnten zweiten und dritten Schnittphase erfolgt.

Der schraffierte Bereich H in den Fig. 6a bis 6c stellt, wie bereits erwähnt, den Bereich der zulässigen Oberwerte der Beanspruchung dar.

Die erfindungsgemäss erreichte Verteilung der Spitzenlast ermöglicht den Einsatz des handbetriebenen Werkzeugs in Anwendungsbereichen, die bislang hydraulischen und anderen von einer anderen Kraft als der Handkraft des Benutzers angetriebenen Anordnungen vorbehalten waren.

**Patentansprüche**

1. Handbetätigtes Schneidgerät, insbesondere Kabelschneider, umfassend eine feststehende Schneidplatte (21), die an einem Ende einen Montageteil (21') und anschliessend daran einen Schneidteil (21") aufweist, der eine äussere und eine innere Umfangskante hat; eine erste kurvenförmig verlaufende Schneide (21a), die entlang der genannten inneren Umfangskante zwischen einem ersten Ende (21a') im Bereich des Montageteiles (21') und einem hiervon entfernten zweiten Ende (21a") verläuft; ein Drehmesser (22) mit einer kreisförmigen äusseren Umfangskante und einer kurvenförmigen inneren Umfangskante; eine entlang dieser äusseren Umfangskante angeordnete Zahnreihe (22b); eine zweite kurvenförmige Schneide (22a), die entlang der letztgenannten inneren Umfangskante zwischen einem ersten Ende (22a') und einem zweiten Ende (22a") verläuft und der ersten Schneide (21a) zugewandt ist; ein Schwenkzapfenorgan (22c) zur Verbindung des Drehmessers (22) mit der Schneidplatte (21) im Bereich beider genannten zweiten Enden (21a", 22a"), wobei die genannte Zahnreihe (22b) in diesem Schwenkzapfenorgan (22c) zentriert ist; einen unbeweglichen ersten Handgriff (11), der an einem Ende starr an den Montageteil (21') der Schneidplatte (21) angeschlossen ist; einen beweglichen zweiten Handgriff (12), der an einem Ende einen Anschlussteil (112) zum Anlenken an den genannten Montageteil (21') aufweist; und einen zwischen dem genannten Ende des zweiten Handgriffes (12) und der genannten äusseren Umfangskante des Drehmessers (22) angeordneten Vorschubtrieb zur Umwandlung der Hubbewegungen des zweiten Handgriffes (12) in eine schliessende Schwenkbewegung des Drehmessers (22) auf die Schneidplatte (21) zu, dadurch gekennzeichnet, dass der genannte Vorschubtrieb ein Exzentertrieb ist, der folgende Teile umfasst: einen Gelenkbolzen (30) zum Anschluss des zweiten Handgriffes (12) an den Montageteil (21') der Schneidplatte (21) an einer unveränderlichen Stelle; einen zylindrischen Block (31), der mit gewählter Exzentrizität gegenüber dem Gelenkbolzen (30) starr an den Anschlussteil (12a) des zweiten Handgriffes angeschlossen ist; eine Vorschubklinke (40), die einen Eingriffsteil (40a) mit einer Verzahnung (40a') für den Eingriff mit der genannten Zahnreihe (22b) und einen Lagerungsteil (40b) mit einer kreisrunden Öffnung (40b') zur Aufnahme des zylindrischen Blockes (31) aufweist, wobei die Vorschubklinke (40) mittels dieser Öffnung (40b') drehbar am zylindrischen Block (31) gelagert ist; ein federndes Glied (13), welches die Vorschubklinke (40) im Sinne des Eingriffes ihrer Verzahnung (40a') mit der genannten Zahnreihe (22a) dauernd beaufschlagt; und eine auslösbare, mit der genannten Zahnreihe (22b) eingreifende Halteklinke (41) zur Verhinderung einer unerwünschten Rückbewegung des Drehmessers (22).

2. Schneidgerät gemäss Patentanspruch 1, dadurch gekennzeichnet, dass der Gelenkbolzen (30) kleineren Durchmesser als der zylindrische Block (31) hat und dass im Anschlussteil (112) des zweiten Handgriffes (12), im zylindrischen Block (31) und im Montageteil (21') der Schneidplatte (21) Bohrungen vorgesehen sind, durch welche der Gelenkbolzen (30) hindurchgehen kann.

3. Schneidgerät gemäss Patentansprüchen 1 oder 2, dadurch gekennzeichnet, dass in zumindest einer der genannten Öffnungen (40b') und Bohrungen ein reibungsherabsetzendes Lager (30a, 40c) angeordnet ist.

4. Schneidgerät gemäss Patentanspruch 3, dadurch gekennzeichnet, dass das genannte Lager (30a, 40c) ein Nadellager oder Nadelkäfig ist.

5. Schneidgerät gemäss irgendeinem der vorgehenden Patentansprüche, dadurch gekennzeichnet, dass zumindest im zweiten Handgriff (12) ein innerer Hohlraum (12h) vorgesehen ist und dass das federnde Glied eine Zugfeder (13) ist, die an einem Ende in diesem Hohlraum (12h) und am anderen Ende an der Vorschubklinke (40) verankert ist.

6. Schneidgerät gemäss Patentanspruch 5, dadurch gekennzeichnet, dass die Zugfeder (13) mittels eines Zugbügels (14) an die Vorschubklinke (40) angeschlossen ist und dass ein Anschlagglied (15) vorgesehen ist gegen welches der Zugbügel in ausgeschwenkter Lage des zweiten Handgriffes (12) anstösst.

7. Schneidgerät gemäss irgendeinem der vorgehenden Patentansprüche, dadurch gekennzeichnet, dass ein Sperrmechanismus für den zweiten Handgriff (12) vorhanden ist, der eine Aussparung (112") an einer Seitenkante (112') des genannten Anschlussteiles (112) und eine im genannten Montageteil (21a) drehbar gelagerte Sperrwelle (10b) umfasst, die im Bereich der Aussparung (112") reduzierten Durchmesser aufweist und derart gelagert ist, dass sie je nach ihrer Drehlage in die Aussparung (112″) eingreift, oder diese freigibt.

8. Schneidgerät gemäss irgendeinem der vorgehenden Patentansprüche, dadurch gekennzeichnet, dass die Halteklinke (41) die Form eines federbelasteten zweiarmigen Hebels hat, dessen einer Arm (41a) sich zur genannten Zahnreihe (22b) hin erstreckt und mit einer Eingriffsspitze (41a′) versehen ist, wobei der zweite Arm (41b) von aussen her zugänglich ist, um mittels Druck beaufschlagt werden zu können.

9. Schneidgerät gemäss irgendeinem der vorgehenden Patentansprüche, dadurch gekennzeichnet, dass die zweite Schneide (22a) der Reihe nach vom ersten Ende (22a′) zum zweiten Ende (22a″) folgende Abschnitte aufweist: einen Aufnahmeabschnitt (0) ohne Schneidfunktion, einen ersten Schneidabschnitt (1) mit einem ersten konvexen Vorsprung (1a), einen zweiten Schneidabschnitt (2) der in einem ansteigenden Teil eines zweiten konvexen Vorsprungs (2a) endet, einen dritten Schneidabschnitt (3) der im absinkenden Teil des zweiten konvexen Vorsprungs (2a) beginnt, und einen nur-konkaven vierten abschliessenden Schneidabschnitt (4).

10. Schneidgerät gemäss irgendeinem der vorgehenden Patentansprüche, dadurch gekennzeichnet, dass die zweite Schneide (22a) einen ersten konvexen Vorsprung (1a) im Bereich ihres ersten Endes (22a′), und einen minder scharfen zweiten konvexen Vorsprung (2a) zwischen dem ersten konvexen Vorsprung (1a) und ihrem zweiten Ende (22a″) aufweist.

## Claims

1. Manually operable cutting implement, in particular cable cutters, comprising a stationary cutting plate (21) which comprises at one end a mounting part (21′) and adjoining the latter a cutting part (21″) having an outer and an inner peripheral edge; a first curved cutting edge (21a) which extends along said inner peripheral edge between a first end (21a′) in the region of the mounting part (21′) and a second end (21a″) remote therefrom; a rotary blade (22) having a circular outer peripheral edge and a curved inner peripheral edge; a row of teeth (22b) disposed along said outer peripheral edge; a second curved cutting edge (22a) which extends along the latter inner peripheral edge between a first end (22a′) and a second end (22a″) and faces the first cutting edge (21a); a pivot pin member (22c) for connecting the rotary blade (22) to the cutting blade (21) in the region of two said second ends (21a″, 22a″), the said row of teeth (22b) being centered in said pivot pin member (22c); an immovable first grip (11) which is connected at one end rigidly to the mounting part (21′) of the cutting plate (21); a movable second grip (12) which at one end comprises a connecting portion (112) for articulate connection to said mounting part (21′); and a feed drive arranged between said end of the second grip (12) and said outer peripheral edge of the rotary blade (22) for converting the stroke movements of the second grip (12) to a closing pivotal movement of the rotary blade (22) towards the cutting plate (21), characterized in that said feed drive is an eccentric drive having the following parts: a pivot pin (30) for connection of the second grip (12) to the mounting part (21′) of the cutting plate (21) at an invariable point; a cylindrical block (31) which is connected with selected eccentricity with respect to the pivot pin (30) rigidly to the connecting portion (12a) of the second grip; a drive pawl (40) having an engagement portion (40a) with a toothing (40a′) for engagement with said row of teeth (22b), and a mounting portion (40b) having a circular opening (40b′) for receiving the cylindrical block (31), the drive pawl (40) being mounted by means of said opening (40b′) rotatably on the cylindrical block (31); a resilient member (13) which permanently urges the drive pawl (40) in the sense of engagement of the toothing (40a′) thereof with said row of teeth (22a); and a releasable retaining pawl (41) engaging said row of teeth (22b) for preventing an undesired return movement of the rotary blade (22).

2. Cutting implement according to claim 1, characterized in that the pivot pin (30) has a smaller diameter than the cylindrical block (31) and that in the connecting portion (112) of the second grip (12), in the cylindrical block (31) and in the mounting part (21′) of the cutting plate (21) bores are provided through which the pivot pin (30) can pass.

3. Cutting implement according to claims 1 or 2, characterized in that in at least one of said openings (40b′) and bores a friction-reducing bearing (30a, 40c) is arranged.

4. Cutting implement according to claim 3, characterized in that said bearing (30a, 40c) is a needle bearing or a needle cage.

5. Cutting implement according to any one of the preceding claims, characterized in that at least in the second grip (12) an inner cavity (12h) is provided and that the resilient member is a tension spring (13) which is anchored at one end in said cavity (12h) and at the other end to the drive pawl (40).

6. Cutting implement according to claim 5, characterized in that the tension spring (13) is connected by means of a tension yoke (14) to the drive pawl (40) and that a stop member (14) is provided against which the tension yoke strikes when the second grip (12) is in the outwardly pivoted position.

7. Cutting implement according to any one of the preceding claims, characterized in that a ratchet mechanism is provided for the second grip (12) which comprises a recess (112″) at a side edge (112′) of said connecting portion (112) and a blocking shaft (10b) which is rotatably mounted in said mounting part (21a) and is of reduced diameter in the region of the recess (112″), and is mounted in such a manner that in accordance with its rotational position it engages into the recess (112″) or releases the latter.

8. Cutting implement according to any one of the preceding claims, characterized in that the retaining pawl (41) has the form of a springloaded two-armed lever, the one arm (41a) of which extends to said row of teeth (22b) and which is provided with an engagement tip (41a'), the second arm (41b) being accessible from the outside in order to apply pressure thereto.

9. Cutting implement according to any one of the preceding claims, characterized in that the second cutting edge (22a) comprises in succession from the first end (22a') to the second end (22a") the following sections: a receiving section (0) with no cutting function, a first cutting section (1) having a first convex projection (1a), a second cutting section (2) which terminates in a rising portion of a second convex projection (2a), a third cutting section (3) which starts in the declining portion of the second convex projection (2a), and an only concave fourth terminating cutting section (4).

10. Cutting implement according to any one of the preceding claims, characterized in that the second cutting edge (22a) comprises a first convex projection (1a) in the region of its first end (22a') and a less pointed second convex projection (2a) between the first convex projection (1a) and its second end (22a").

**Revendications**

1. Dispositif de coupe manuel, en particulier sectionneur de câbles, comprenant: une matrice de découpage fixe (21), comportant, à sa partie inférieure, une pièce d'assemblage (21') solidaire d'une pièce tranchante (21") qui présente un bord périphérique interne et un bord périphérique externe; und première lame de forme courbe (21a) qui s'étend le long dudit bord périphérique interne de ladite pièce tranchante, entre une première extrémité (21a') située sensiblement au niveau de la pièce d'assemblage (21') et une deuxième extrémité (21a") qui en est éloignée; une lame rotative (22) ayant un bord périphérique externe circulaire et un bord périphérique interne de forme courbe, cette lame comportant une denture (22b) disposée le long de son bord périphérique externe et une partie coupante constituant une deuxième lame de forme courbe (22a) qui s'étend le long du bord périphérique interne entre une première extrémité (22a') et une deuxième extrémité (22a") et qui est orientée en direction de la première lame fixe (21a); un dispositif d'articulation (22c) pour relier la lame rotative (22) à la matrice de découpage (21) au niveau des deux extrémités (21a" et 22a"), et sur lequel la denture (22b) est centrée; un premier manche fixe (11) qui est fixé très fermement à la pièce d'assemblage (21') de la matrice de découpage (21); un deuxième manche mobile (12) qui comporte à une extrémité une pièce de raccordement (112) pour articulation à la pièce d'assemblage (21'); et une pièce d'avancement se situant entre l'extrémité du deuxième manche (12) et le bord périphérique interne de la lame rotative (22) et servant à transformer les actions de poussée du deuxième manche (12) en un mouvement de pivotement de la lame rotative (22) en direction de la matrice de découpage (21); ce dispositif étant caractérisé par le fait que la force d'avancement provient d'une force excentrique provoquée par les pièces suivantes: un axe d'articulation (30) pour la fixation du deuxième manche (12) à la pièce d'assemblage (21') de la matrice de découpage (21) à un endroit immuable; un bloc cylindrique (31) ayant une excentricité choisie par rapport à l'axe d'articulation (30) qui est fermement fixé à la pièce de raccordement (112) du deuxième manche; un levier d'avancement (40) qui comporte une pièce d'engrènement (40a) doté d'une denture (40a') pour un engrènement avec la denture (22b) de la lame rotative, et une pièce de réception (40b) avec une ouverture ronde (40b') pour le logement du bloc cylindrique (31), le levier d'avancement (40) étant monté, de manière pivotante, grâce à cette ouverture (40b') sur le bloc cylindrique (31); un organe élastique (13) qui assure le contact permanent du levier d'avancement (40), dans le sens de l'engrènement de sa denture (40a') avec la denture (22b) de la lame rotative (22); et un levier d'arrêt (41) en prise avec la denture (22b), pour éviter un mouvement de recul non souhaité de ladite lame rotative (22).

2. Dispositif de coupe selon la revendication 1, caractérisé en ce que l'axe d'articulation (30) a un diamètre inférieur à celui de bloc cylindrique (31), et en ce que dans la pièce de raccordement (112) du deuxième manche (12), dans le bloc cylindrique (31) et dans le pièce d'assemblage (21') de la matrice de découpage (21) sont prévus des perçages à travers lesquels l'axe d'articulation (30) peut passer.

3. Dispositif de coupe selon les revendications 1 ou 2, caractérisé par le fait qu'au moins l'un des perçages et l'ouverture (40b') est pourvu d'un palier de réduction de la friction (30a, 40c).

4. Dispositif de coupe selon la revendication 3, caractérisé par le fait que le palier (30a – 40c) précité est un roulement à aiguilles ou palier à aiguilles.

5. Dispositif de coupe selon l'une quelconque des revendications 1 à 4, caractérisé par le fait qu'au moins dans le deuxième manche (12) se trouve une partie creuse (12h) et que l'organe élastique est constitué par un ressort de traction (13), qui est assujetti, par l'intermédiaire de l'une de ses extrémités, à l'une des extrémités de cette partie creuse (12h) et, par l'intermédiaire de son autre extrémité, au levier d'avancement (40).

6. Dispositif de coupe selon la revendication 5, caractérisé par le fait que le ressort de traction (13) est fixé à l'aide d'une bride de traction (14) au levier d'avancement (40) et en ce que ledit dispositif comporte une pièce de butée (15) contre laquelle la bride de traction s'appuie lors de la position pivotante au deuxième manche (12).

7. Dispositif de coupe selon l'une quelconque des revendications 1 à 6, caractérisé en ce qu'un mécanisme d'arrêt est prévu pour le deuxième manche (12) qui comporte un évidement (112") sur l'un des bords latéraux (112') de la pièce de raccordement (112), et en ce qu'une broche d'arrêt (10b) est placée dans la pièce d'assemblage (21'), cette broche d'arrêt ayant un diamètre réduit au niveau de l'évidement (112″) et étant montée de telle façon que, selon sa position, elle s'engrène avec ledit évidement (112″) ou le libère.

8. Dispositif de coupe selon l'une quelconque des revendications 1 à 7, caractérisé par le fait que le levier d'arrêt (41) a la forme d'un manche à deux bras pourvu d'un ressort, dont l'un des bras (41a) s'étend en direction de l'engrenage (22b) et comprend une pièce d'engrènement (41a), et dont le second bras (41b) est accessible de l'extérieur, pour pouvoir être actionné par pression.

9. Dispositif de coupe selon l'une quelconque des revendications 1 à 8, caractérisé par le fait que la deuxième lame (22a) est successivement soumise, de la première extrémité (22a′) à la seconde extrémité (22a″) de ladite lame, aux phases suivantes: une phase de contact (0) sans fonction de sectionnement, une première phase de découpage (1) par l'intermédiaire d'une première saillie convexe (1a), une deuxième phase de découpage (2) qui prend fin sur la partie croissante d'une seconde saillie convexe (2a), une troisième phase de découpage (3) sur la partie décroissante de la seconde saillie convexe (2a) et une quatrième phase de découpage finale (4) par l'intermédiaire d'une partie exclusivement concave.

10. Dispositif de coupe selon l'une quelconque des revendications 1 à 9, caractérisé par le fait que la deuxième lame (22a) comporte une première saillie convexe (1a) disposée au niveau de sa première extrémité (22a′) et une deuxième saillie convexe (2a) moins tranchante située entre ladite première saillie convexe (1a) et sa seconde extrémité (22a″).

Fig.1

Fig.2

0186222

*Fig.3*

11

Fig.4

Fig.5

0186222

Fig.6a

Fig.6aa

CU 240

Fig.6b

Fig.6bb

CU 240

Fig.6c

Fig.6cc

4×Al ⌀ 45